# EUROPEAN PATENT APPLICATION

(11) **EP 1 258 808 A2**
(43) Date of publication of application: **20.11.2002**
(21) Application number: 02253110.7
(22) Date of filing: 02.05.2002
(51) Int. Cl.: G06F 13/00

(54) **Method and apparatus for providing synchronized data**

(30) Priority: 18.05.2001 US 861300
(71) Applicant: Hewlett-Packard Company, Palo Alto, CA 94304 (US)
(72) Inventor: Venkataraman, Buvana, Corvallis, OR 97330 (US)
(74) Representative: Jackson, Richard Eric

(57) **Abstract**

Synchronization devices (104), preferably available in kiosks at publicly accessible locations, are provided with at least one remote device interface (206). A user of a remote device (106) couples the remote device to the at least one remote device interface and the synchronization device thereafter initiates synchronization of remote data (120) found in the remote device with central data (122) found on at least one central device (110). Synchronization is performed by a synchronization application (112) that preferably resides on the at least one central device. The synchronization application provides synchronized data that may include, but is not limited to, contact data, calendar data, email, shared files and the like. The synchronization device updates the remote device and also routes the synchronized data to a printer (210) for printing. In this manner, the remote device user can obtain hardcopies of the synchronized data without having to be directly coupled to his or her local device.

## Description

### Technical Field

The present invention relates generally to remote devices, such as personal data managers and the like, and, in particular, to a method and apparatus for providing synchronized data to such remote devices.

### Background Of The Invention

Electronic, mobile personal digital assistants (PDAs) and the like (hereinafter referred to as remote devices) are well known in the art. In essence, such devices allow a user to use many of the functions traditionally found in more conventional computing systems, such as desktop personal computers, by allowing the user of the remote device to store, manipulate and access various types of data. For example, users of remote devices may work with personal or business contact information, calendar data, email and a variety of other data types through their remote devices.

One result of the ability to manage data remotely is the need to periodically synchronize the data maintained on the remote device with similar data found in a local device, e.g., a home or office computer. For example, a user may maintain a calendar at their place of business on a personal computer (or networked file server) using a calendar application stored upon and executed by various personal computers, including the user's personal computer. While at the office, the user or another party (e.g., the user's assistant) may enter or modify calendar data (appointment dates, times, locations, etc.) directly (or through a network) in the user's personal compute (or networked file). Additionally, while away from the office, the user may continue to enter and modify calendar data using his or her remote device using the same, or a remote version of, the calendar program. In essence, the user is able to maintain two separate databases for his or her calendar data, one at the office and one on the remote device. This gives rise to the potential for conflicts between the databases. For example, the user may inadvertently schedule two appointments for the same time on the same day, or fail to schedule an appointment because otherwise outdated data may indicate that the desired time slot is not available.

To avoid these situations, the calendar data stored remotely and locally must be periodically synchronized. Such synchronization operations are well known in the art and generally entail a comparison of the data in the respective databases by a synchronization application. Often, the synchronization application is integrated with the data management application, e.g., the calendar application. Based on the comparison, the synchronization application can generate updated calendar information that reflects the desired changes from both databases. Any conflicts found are resolved on a case-by-case basis or in light of a general instruction that data from one source is to take precedence over data from the other source. The output of the synchronization application is thus a single set of data that may thereafter be stored in both databases. While the foregoing example is based on the use of calendar data, the need for periodic synchronization and synchronization applications suitable for performing the synchronization process equally exist for other types of data, as known in the art. In general, two methods currently exist for a user to synchronize data on their respective remote and local devices.

In the first method, the user is required to couple the remote device to the local device such that a synchronization application, resident on either device, may synchronize the data. Typically, the remote device is coupled to the local device through the use of a cradle that is itself coupled directly to the local device. Placement of the remote device in the cradle either automatically initiates or allows the user to manually initiate the synchronization process. Alternatively, the remote device may be coupled to the local device through a remote connection such as a modem or network connection.

In the second method, a central device, such as server located on a publicly accessible network like the Internet or World Wide Web, is used to store the data requiring synchronization. Thus, any changes made to the data at a local device (e.g., a personal computer at home or in an office) or a remote device (e.g., a PDA or similar device) is reflected in the data stored at the central location through synchronization on a periodic or on-demand basis. Various service providers in this regard are currently available, examples of which may be found at www.steltor.com provided by Steltor, Inc. (formerly, Corporate Software & Technologies/Lexacom), www.anyday.com provided by Anyday.com, Inc. and www.fusionone.com provided by fusionOne, Inc.

While the above-described method work, they each suffer from a fundamental limitation. That is, neither method allows a remote user to conveniently obtain a hardcopy of the synchronized data. Although it is possible to obtain, for example, a printout of a calendar after the remote device has been coupled to and synchronized with the local device by using a printer attached to the local device, this provides no help to the user that is unable to co-locate the remote device with the local device. Thus, it would be advantageous to provide a way for users of remote devices to not only synchronize data remotely, but to also obtain hardcopies of the synchronized data.

### Summary Of The Invention

The present invention provides a way for users of remote device to synchronize data and obtain hardcopies of the resulting synchronized data. To this end, synchronization devices, such as kiosks at publicly accessible locations, are provided with at least one remote device interface. A user of a remote device couples the remote device to the at least one remote device interface. The synchronization device initiates synchronization of remote data found in the remote device with central data found on at least one central device by communicating with a synchronization application accessible through a communication network. In a preferred embodiment, the communication network is a publicly available network such as the Internet or World Wide Web and the at least one central device is one or more servers coupled thereto. Furthermore, the synchronization application preferably resides on the at least one central device. Using a network interface, the synchronization device communicates the remote data to the synchronization application and receives, in response, synchronized data. The synchronized data may include, but is not limited to, contact data, calendar data, email, shared files and the like. Upon receiving the synchronized data, the synchronization device can update the remote device and also route the synchronized data to a printer, coupled to or integrated into the synchronization device, for printing. In this manner, the remote device user can obtain hardcopies of the synchronized data without having to be directly coupled to his or her local device.

### Brief Description Of The Drawings

In the detailed description of presently preferred embodiments of the present invention which follows, reference will be made to the drawings comprised of the following figures, wherein like reference numerals refer to like elements in the various views and wherein:
FIG. 1 is block diagram of a communication system, including a synchronization device, in accordance with the present invention;
FIG. 2 is a block diagram of a synchronization device in accordance with the present invention; and
FIG. 3 is a flowchart illustrating operation of a synchronization device and synchronization application in accordance with the present invention.

### Detailed Description of the Invention

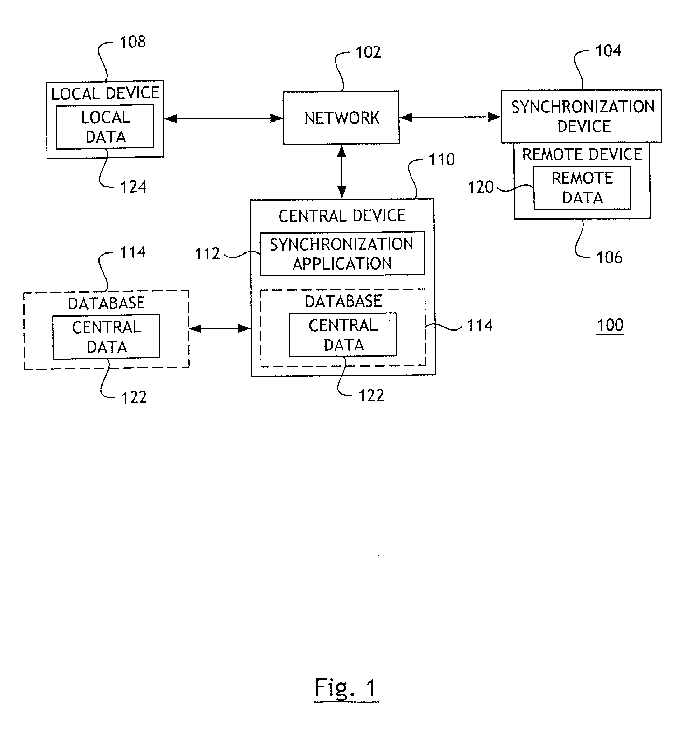

The present invention may be more readily described with reference to FIGS. 1-3. FIG. 1 is a block diagram of a communication system 100 in accordance with the present invention. In particular, the communication system 100 comprises a communication network 102 coupled to a synchronization device 104, a local device 108 and a central device 110. In operation, the synchronization device 104 is coupled to a remote device 106. The communication network 102 preferably comprises a publicly available network such as the Internet or World Wide Web. However, the communication network 102 may comprise a private or proprietary network exclusively, or in combination with a publicly available network. Furthermore, the communication paths within the communication network 102, or between the communication network 102 and the various devices 104, 108, 110 may comprise wired or wireless links, as known in the art. The nature and use of such networks are well known in the art and therefore need not be described in greater detail herein.

The local device 108 comprises any normally non-mobile computing and storage device capable of storing and manipulating local data 124. For example, the local device may comprise a desktop personal computer coupled to the network 102 via a direct (e.g., modem) or internal network connection (e.g., a local area network having a gateway to the communication network 102). Alternatively, the local device 108 may comprise a server having a similarly direct or networked connection to the network 102. The local data 124 comprises any type of data susceptible to synchronization. Such data types include, but are not limited to, contact data (e.g., phone numbers, addresses, etc.), calendar data, email, shared files and the like. The local data 124 may be entered into and manipulated by the local device 108 using any of a number of well known application programs. Furthermore, and as described in greater detail below, the local data 124 is periodically synchronized to be in accordance with central data 122.

The central device 110 preferably comprises one or more servers, well known to those having ordinary skill in the art, coupled to the network 102. In particular, the central device 110 is uniquely addressable on the network 102 through the use, for example, of a so-called Uniform Resource Locator (URL) in the case where the network 102 comprises the World Wide Web. As such, direct communication between the central device 110 and, for example, the synchronization device 104 is possible. A synchronization application 112 preferably resides on the central device 110. Examples of suitable synchronization applications are the services provided by various on-line sites, such as www.lexacom.com, www.anyday.com and www.fusionone.com. In general, each of these synchronization applications provides a subscriber the ability to maintain central data 122 against which local data 124 or remote data 120 is synchronized on a periodic or on-demand basis. Stated another way, a single subscriber account to the synchronization application 112 allows a variety of device access to the central data 122 for that subscriber account. After the synchronization application 112 has synchronized data, and therefore updated the central data 122, the central data 122 can be sent automatically (or on demand) to the devices (other than the one that initiated the synchronization) that subscribe to maintenance of the central data 122. Where the central device 110 comprises one or more servers, the central data 122 is maintained in a database 114 that is either resident in the server(s) or externally coupled to the server(s), as illustrated. Such implementations are a matter of design choice and the present invention is not limited in this regard.

In an alternative embodiment, the synchronization application may reside on one or more local devices, thereby bypassing the need for the central device 110. In this case, the central data is subsumed by the local data.

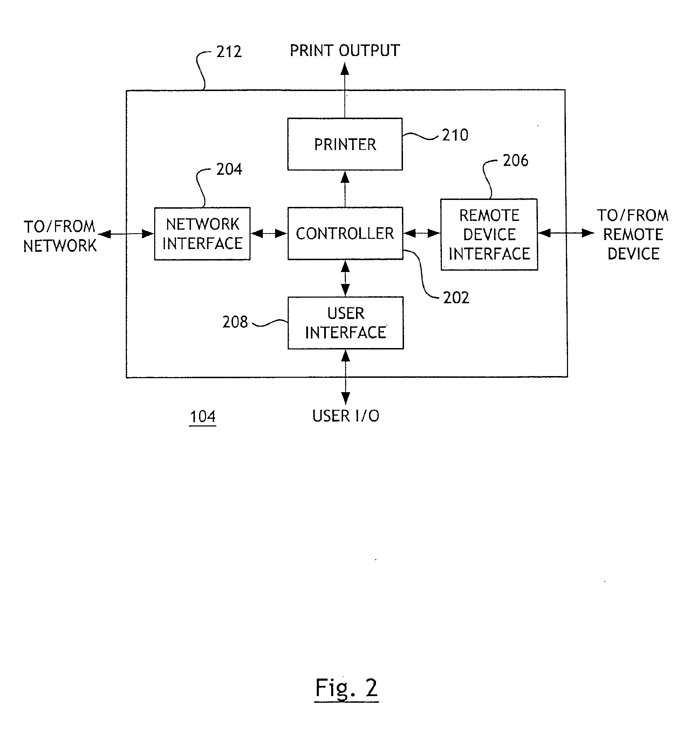

The synchronization device 104 is described in greater detail with reference to FIG. 2 below. In general, the synchronization device 104 comprises a computing platform capable of communicating with the remote device 106, and with the synchronization application 112 via the communication network 102. Preferably, the synchronization device 104 is placed in a publicly accessible location, such as an airport, hotel, etc. A user of remote device 106 couples their device to the synchronization device 104 in order to initiate synchronization of remote data 120 with the central data 122. Note that the remote data 120 and central data 122 are of the same type as the local data, i.e., including, but not limited to, contact data (e.g., phone numbers, addresses, etc.), calendar data, email, shared files and the like. In general, the remote device 106 may comprise any normally mobile platform capable of storing and manipulating data that is susceptible to synchronization. Suitable implementations for the remote device 106 include, but are not limited to, the "PALM" V Series electronic data organizers manufactured by Palm, Inc. or the "VISOR" Series electronic data organizers manufactured by Handspring, Inc. Other devices capable of storing and manipulating data include the Pocket PC computer manufactured by Hewlett-Packard Company, or various data-capable cellular telephones.

Referring now to FIG. 2, a block diagram of a synchronization device 104 in accordance with the present invention is illustrated. As shown, the synchronization device 104 comprises a controller 202 coupled to a network interface 204, at least one remote device interface 206 (one shown), a user interface 208 and a printer 210, all preferably enclosed within a housing 212. The housing 212 is preferably in the form of a kiosk that allows a user to operate the synchronization device 104 in relative privacy. Furthermore, the housing 212 may support a plurality of synchronization devices, thereby providing multi-user access.

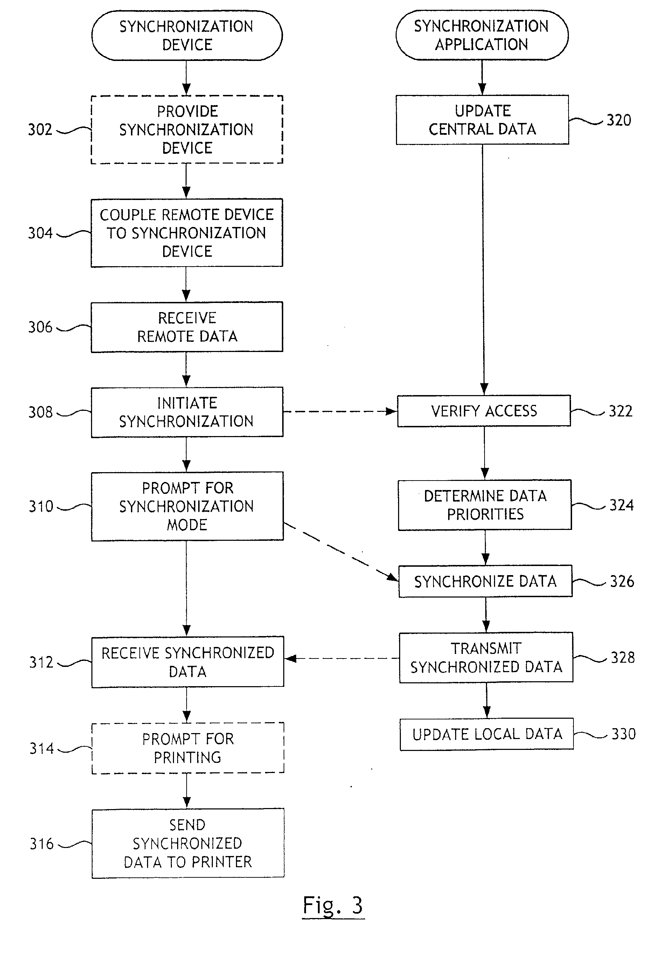

The controller 202 preferably comprises a processor, such as a microprocessor, microcontroller, digital signal processor or the like, or combinations thereof, capable of executing software instructions stored in a suitable storage device, such as volatile or non-volatile digital memory. Alternatively, the controller 202 may be implemented in whole or in part using hardware devices, such as application specific integrated circuits (ASICs), programmable logic arrays (PLAs) and the like. Furthermore, various interface circuitry that allows the controller 202 to communicate with other elements of the synchronization device 104 are not shown. Such implementation details are well known to those having ordinary skill in the art and need not be described in detail herein. The controller 202 coordinates operation of the synchronization device 104 as described in greater detail with reference to FIG. 3.

The network interface 204 comprises interface circuitry suitable for supporting bi-directional communications via a communication network. As used herein, the term "circuitry" is not to be construed in a limiting sense such as a hardware-only implementation. To the contrary, the interface circuitry referenced herein may comprise any combination of hardware, software or firmware, as those terms are used in the art, used to implement the functionality required to support network-based communications. In a preferred embodiment, the network interface 204 supports communications via the Internet or World Wide Web by implementing the so-called TCP/IP protocol suite. Other communication protocols may be implemented by the network interface as a matter of design choice based in part upon the type of communication network used.

The at least one remote device interface 206 provides a bi-directional communication path between the controller 202 and a remote device coupled to the remote device interface 206. Examples of suitable remote device interfaces include the various cradles available for use with currently available remote devices, as described above. In a preferred embodiment, the at least one remote device interface 206 comprises a plurality of such cradles corresponding to the most popular remote devices currently on the market to ensure compatibility. The cradles are mounted on the housing 212 to allow easy user access to the cradles such that a remote device may be readily coupled to any one of the cradles. Alternatively, the remote device interface may comprise a suitable phone plug (e.g., an RJ11 connector) that allows a user to couple a remote device to the synchronization device via a suitable cable, such as a telephone cord. Those having ordinary skill in the art will be able to identify other, functionally similar interface to those described herein. The present invention is not limited in this regard.

A user interface 208 is provided to receive input from, and to provide output to, a user of the synchronization device 104. Thus, the user interface 208 comprises any of a number of input devices including, but not limited to, buttons, switches, touch screens, voice activated controls, magnetic or barcode readers, etc. Likewise, the user interface 208 comprises any of a number of output devices including, but not limited to display screens, speakers, etc. In a preferred embodiment, the user interface 208 allows the controller 202 to display various prompts to the user and receive, in response, user data instructing the controller 202 as to the desired operation of the synchronization device 104.

A printer 210, such as a "DESKJET" 7xx or 8xx Series printer manufactured by the Hewlett-Packard Company, is provided. Suitable software executed by the controller 202, such as "OUTLOOK" by Microsoft Corporation, allows a user to input print commands through the user interface 208 to the controller 202. Alternatively, the controller may receive such commands via the remote device interface 206 in response to user commands entered through the remote device. As described in greater detail below, the printer 210 allows synchronized data to be printed while the user is at the synchronization device 104, thereby facilitating remote printing of synchronized data.

FIG. 3 illustrates operation of a synchronization device and synchronization application in accordance with the present invention. In particular, operation of the synchronization device is illustrated along the left-hand side of the flowchart, whereas operation of the synchronization application is illustrated along the right-hand side of the flowchart. In a preferred embodiment, the processes illustrated in FIG. 3 are implemented as stored software routines that are executed by suitable processors. At step 302, the synchronization device 302 is optionally provided at a publicly accessible location. It is possible that the entity providing the synchronization device is the same as the entity that provides and operates the synchronization application. However, this need not be the case in all instances and, in a preferred embodiment, the providers of the synchronization device and the synchronization application are separate entities.

At step 304, a user of a remote device couples the remote device to the synchronization device. In a preferred embodiment, the user mounts the remote device in a cradle specifically designed to accept the user's remote device. Regardless of the manner in which the coupling occurs, the synchronization device is subsequently able to communicate with the remote device and, at step 306, to receive remote data from the remote device. By coupling the remote device to the synchronization device, the user is manifesting his or her intent to synchronize remote data using a synchronization application. In the case where synchronization of remote data is to be performed relative to central data located at a central device, it is anticipated that the user will have a pre-established subscription with the service provider maintaining the central device. In this case, the step of coupling the remote device to the synchronization device will either automatically, or in response to a user-entered command (for example, through the user interface 208 or through the remote device via the remote device interface 206), cause the synchronization device, at step 308, to initiate synchronization via the synchronization application. Typically, the remote device will include the software and configuration information needed for the synchronization device to establish communication with the appropriate synchronization application. Alternatively, the synchronization device can be provided with the appropriate communication software and would only need to receive the user's configuration information (e.g., account or subscription information). By using the synchronization application provided through the user's subscription, billing for the use of the synchronization device may be handled by the service provider. In the case where the synchronization application is not provided by a third-party service provider, but instead is provided on a local device controlled by the user, payment for use of the synchronization device may be through the use of a credit or debit card. In this case, the user's credit or debit card information may be entered through the user interface 208 in any conventional manner. The user is then charged for use of the synchronization device using conventional billing processes via the network interface 204.

At any time prior to or substantially simultaneous with steps 302 through 306, the central data may be updated by the synchronization application at step 320. For example, while a user is away from the office, his or her assistant may enter local data on a local device that requires synchronization with the central data. The changes to the local data may cause synchronization to be initiated automatically. Conversely, the synchronization application may periodically query the local device to determine if any updates to the central data are needed. Operation of a synchronization application in this manner is well known in the art. Regardless, the central data serves as the primary storage point for up to date data.

Once the synchronization device has received remote data from a remote device, it initiates synchronization with the synchronization application at step 308. Typically, this will involve sending a synchronization request to the synchronization application via the communication network. As known in the art, the synchronization device also sends information to the synchronization application regarding when various portions of the remote data were created or modified. Additionally, at steps 308 and 322, any information necessary to validate a user's access to the synchronization application is exchanged between the synchronization device and the synchronization application. For example, account or subscription information, as well as any necessary passwords can be exchanged thereby verifying that the user is allowed to access the central data for synchronization purposes. Once access has been verified, the synchronization application determines relative priorities, in a temporal sense, for the various portions of the remote and central data at step 324. For example, with reference to calendar data, assume that the use of the remote device has, while away from the office, scheduled an appointment at 10 AM on the first day of the following month using his remote device. The synchronization device provides information to the synchronization application indicating when this appointment was added to the remote data. The synchronization application may then compare this information with any information in the central data corresponding to that time slot and day. If no such information exists in the central data, indicating that no appointment has been scheduled per the central data, then the remote data may be assumed to take priority. If there is a corresponding appointment scheduled in the central data, then the time of creation or modification of the appointment in the remote data is compared with the time of creation or modification of the appointment in the central data. This process is preferably repeated for every portion of the remote data that has been created or modified since the last instance of synchronization. Furthermore, this same process of determining temporal priority may be repeated for other types of data.

After initiation of synchronization, the synchronization device prompts the user for information regarding a synchronization mode at step 310. This could be achieved by displaying the prompt via the user interface 208 of the synchronization device, or via a display in the remote device itself. In a preferred embodiment, three different synchronization modes are possible. In the first, remote data having temporal priority (i.e., most recently created/modified) is preferred and overwrites data found in the central data. In the second, the opposite is true, and central data having temporal priority is preferred and overwrites data found the remote data. In the third mode, data having temporal priority is preferred regardless of its source. These three options are presented to the user at step 310, along with an option to cancel the synchronization procedure. Upon receipt, the user's selection in response to the prompt is provided to the synchronization application. With the synchronization mode information, the synchronization application synchronizes the remote and central data accordingly at step 326. In this manner the central data is now synchronized to reflect the changes necessitated, if at all, by the remote data. The synchronized data (i.e., the now-updated central data) is transmitted by the synchronization application at step 328 and received by the synchronization device at step 312. The form of the synchronized data is a matter of design choice. For example, the synchronized data may comprise a copy of all of the relevant central data, or information indicative of the modifications that must be made to the remote data in order to synchronize it to the central data. Regardless, the synchronization application, at step 330, subsequently updates (either periodically or on-demand) the local data on any local devices that subscribe to synchronization services for the central data.

Having received the synchronized data, the remote device updates the local data accordingly, thereby bringing it into agreement with the central data. At step 314, the synchronization device may optionally prompt the user (via the synchronization device's user interface or the remote device itself) whether the synchronized data should be printed. If the user responds to the prompt in the affirmative, then, at step 316, the remote data is routed to the printer for printing. As an alternative, the synchronization device could default to a mode in which it automatically sends the synchronized data to the printer. In accordance with the present invention, the step of printing the synchronized data is assumed to be within the context of an application to which the synchronized data pertains. For instance, and again to the example of calendar data, the now synchronized calendar data is preferably printed out in calendar form. The calendar application takes care of the formatting of the data prior to printing. Likewise, other types of data may be printed out in a suitable format. The formatting of data for printing is well known in the art and need not be described in detail herein. In this manner, the user is able to obtain hardcopy of the synchronized data at the time and place where they are very likely to need it, i.e., remotely.

While the foregoing detailed description sets forth presently preferred embodiments of the invention, it will be understood that many variations may be made to the embodiments disclosed herein without departing from the true spirit and scope of the invention. This true spirit and scope of the present invention is defined by the appended claims, to be interpreted in light of the foregoing specifications.

## Claims

1. An apparatus for synchronizing remote data (120) on a remote device (106) and central data (122) on at least one central device (110) coupled to a communication network (102), comprising:
a controller (202);
at least one remote device interface (206), coupled to the controller, that provides communication between the remote device and the controller;
a network interface (204), coupled to the controller, that allows the controller to communicate via the communication network; and
a printer (210), coupled to the controller,
wherein the controller initiates synchronization of the remote data and the central data when the remote device is coupled to the at least one remote device interface to provide synchronized data on the remote device, and wherein the controller routes the synchronized data to the printer.

2. The apparatus of claim 1, wherein the controller routes the synchronized data to the printer automatically.

3. The apparatus of claim 1, wherein the controller routes the synchronized data to the printer in response to a command received via the at least one remote device interface.

4. The apparatus of claim 1, further comprising a user interface (208) coupled to the controller, wherein the controller routes the synchronized data to the printer in response to a command received via the user interface.

5. A publicly available kiosk (212) comprising the apparatus of claim 1.

6. In a synchronization device (104) coupled to at least one central device (110) via a communication network (102), the at least one central device (110) comprising central data (122), a method for providing synchronized data, the method comprising steps of:
receiving (306) remote data (120) from a remote device (106) coupled to the synchronization device;
initiating (308), via the communication network, synchronization of the central data and the remote data via a synchronization application (112);
receiving (312), via the communication network, synchronized data from the synchronization application; and
sending (316) the synchronized data to a printer for printing.

7. The method of claim 6, further comprising a step of:
providing (302) the synchronization device in a publicly accessible location.

8. A computer-readable medium (202) comprising computer-executable instructions for performing the method of claim 6.

9. In a system comprising a synchronization device (104) coupled to a synchronization application (112) via a communication network (102), a method for providing synchronized data, the method comprising steps of:
detecting (304), by the synchronization device, that a remote device (106) is coupled thereto, the remote device comprising remote data (120);
sending (308), by the synchronization device to the synchronization application, a request to synchronize the remote data with central data (122) stored on at least one central device (110), the at least one central device coupled to the communication network;
synchronizing (326), by the synchronization application, the remote data and the central data in response to the request to provide the synchronized data;
sending (328), by the synchronization application, the synchronized data to the synchronization device; and
sending (316), by the synchronization device, the synchronized data to a printer (210) for printing.

10. The method of claim 9, wherein the synchronization application resides on the at least one central device.
